# FASCICULE DE BREVET EUROPEEN

(11) **EP 2 191 190 B1**
(45) Date de publication et mention de la délivrance du brevet: **12.10.2011**
(21) Numéro de dépôt: 08831062.8
(22) Date de dépôt: 27.08.2008
(51) Int. Cl.: F17C 5/06, F17C 13/02

(54) **PROCEDE DE REMPLISSAGE DE CONTENEUR DE GAZ SOUS PRESSION**
VERFAHREN ZUM FÜLLEN EINES DRUCKGASTANKS
METHOD FOR FILLING A PRESSURISED GAS CONTAINER

(30) Priorité: 10.09.2007 FR 0757456
(43) Date de publication de la demande: 02.06.2010
(73) Titulaire: L'Air Liquide Société Anonyme pour l'Etude et l'Exploitation des Procédés Georges Claude, 75007 Paris (FR)
(72) Inventeur: ALLIDIERES, Laurent, F-38410 St Martin D'Uriage (FR); CHARBONNEAU, Thomas, Westmount, Quebec TT271J6 (CA); SEQUEIRA, Sébastian, F-38210 Vourey (FR); VINARD, Thomas, F-38360 Sassenage (FR)
(74) Mandataire: De Cuenca, Emmanuel Jaime
(86) Numéro de dépôt international: PCT/FR2008/051533
(87) Numéro de publication internationale: WO 2009/034283

(56) Documents cités:
- EP-A- 1 772 663
- EP-A- 1 818 597
- WO-A-2007/077376
- US-A1- 2003 070 724
- US-A1- 2005 178 463

## Description

La présente invention concerne le remplissage de conteneur de gaz sous pression. En particulier, l'invention a trait au remplissage de réservoir de gaz de véhicules à pile combustible ou à moteur à combustion interne fonctionnant à l'hydrogène.

Le document EP1818597 décrit un procédé de remplissage consistant à utiliser deux étapes successives de remplissage (la deuxième étape de remplissage ayant un débit de remplissage inférieur au débit de remplissage de la première étape). Ce procédé de remplissage est conformé pour améliorer la fiabilité des mesures (par exemple pression et température) et la précision de la quantité de gaz transférée lors du remplissage. Ce procédé, s'il permet d'obtenir une mesure relativement précise de la masse transférée est cependant peu satisfaisant pour améliorer la vitesse de remplissage. Le document US 2003/070724 décrit aussi un procédé de remplissage consistant à utiliser deux étapes successives de remplissage.

Le remplissage de réservoirs ou conteneurs d'hydrogène à bord de véhicule doit être effectué au plus en quelques minutes, préférentiellement en moins de cinq minutes, de sorte que le remplissage soit compatible avec une utilisation quotidienne du véhicule par l'utilisateur, c'est-à-dire un temps d'immobilisation du véhicule minimal.

La pressurisation rapide des réservoirs induit un échauffement du gaz à des températures élevées, ce qui est susceptible d'endommager les parois du réservoir. Ainsi, il est donc très important de ne pas dépasser cette valeur limite de température, laquelle est donnée par le fabriquant de réservoirs.

L'échauffement du gaz est dû, d'une part, à l'effet dit « Joule-Thomson », échauffement provoqué par la différence de pression entre la source d'hydrogène et le réservoir, et d'autre part à la compression du gaz dans le réservoir de destination. L'échauffement par effet « Joule-Thomson » se produit le long du conduit et des accessoires, notamment les vannes, les flexibles, les tuyauteries, se trouvant sur le circuit de remplissage. L'échauffement par compression du gaz est quant à lui lié à l'introduction d'enthalpie dans le réservoir via le gaz d'alimentation : en se comprimant, le gaz à l'intérieur du réservoir voit sa température augmenter. L'effet combiné de ces phénomènes dégage de la chaleur.

Simultanément à cet échauffement a lieu une dissipation de chaleur depuis le gaz vers les parois de son réservoir et ensuite vers l'environnement du réservoir. Cette dissipation se fait en fonction des propriétés thermiques du gaz, du réservoir, de la température ambiante, ainsi que des conditions initiales du remplissage. Selon l'évolution du débit utilisé au long du remplissage l'effet d'échauffement sera plus au moins important que celui de dissipation.

Des modèles mathématiques existent pour calculer l'évolution des conditions du gaz à l'intérieur du réservoir pendant un remplissage, en fonction des certains paramètres (comme les conditions initiales et de l'environnements et les caractéristiques du réservoir) ainsi que les variables d'opération du remplissage (conditions du gaz d'alimentation tout au long du remplissage, le débit au long du remplissage).

Les trois articles suivants donnent par exemple des informations détaillées sur des modèles mathématiques de ce type.
[1] Barral, K. ; Werlen, E. ; Pisot, P. and Renault, P. « Thermal effects related to H2 fast filling in high pressure vessels depending on vessels types and filling procedures : modeling, trials and studies » European Hydrogen Energy Conference EHEC, Grenoble (France) September 2003.
[2] Pregassame, S. ; Barral, K. ; Allidieres, L. ; Charbonneau, T. and Lacombe, Y. « Opération feedback of hydrogen filling station » Hydrogen and Fuel Cells 2004 Conference and Trade Show (Toronto, September 2004).
[3] Barral, K. , Pregassame, S. and Renault, P. « Thermal effects of fast filling hydrogen compression in refueling stations », 15th World Hydrogen Energy Conference, Yokohama (Japan), June 2004

L'utilisation de tels modèles permet de formuler mathématiquement des problèmes d'optimisation.

En particulier, les inventeurs proposent notamment de déterminer la courbe de débit de remplissage en fonction du temps de sorte que le temps total du remplissage se voit minimisé, ceci connaissant les caractéristiques du réservoir, les conditions ambiantes (par exemple la température ambiante), et les conditions du gaz source (par exemple, pression, température), et les contraintes éventuelles (par exemple la température maximale de la paroi du réservoir, le débit maximum de remplissage)

Durant leurs travaux les présents inventeurs ont pu déterminer que, lorsqu'on remplit un réservoir donné, depuis au moins une source de gaz sous pression, à toute autre condition constante, il existe une courbe optimale des débits de remplissage, telle que le temps nécessaire pour effectuer un remplissage jusqu'à une masse donnée, se voit minimisé. De façon surprenante, cette courbe optimale correspond à une maximisation de la dissipation de chaleur.

La présente invention peut concerner la forme et l'application de cette courbe optimale des débits. Au cours de leurs recherches, les inventeurs ont pu déterminer que selon la courbe optimale des débits de remplissage, les débits décroissent au cours du temps, et qu'il est possible de s'approcher de cette courbe optimale des débits par une succession de droites de pentes décroissantes, c'est-à-dire par une suite de différents débits décroissants. De fait, les inventeurs ont trouvé que le temps de remplissage pouvait être réduit lorsque le débit de remplissage était plus fort en début de remplissage qu'en fin de remplissage. Par moyen d'un fort débit au début du remplissage et ensuite de débits plus faibles, il est possible de produire un échauffement de manière contrôlé et de maximiser la dissipation de l'énergie. Plus particulièrement, il est du mérite des inventeurs d'avoir mis au point un nouveau procédé de remplissage de conteneurs de gaz sous pression, lequel comprend au moins trois étapes de remplissage à débit différent. Il est important de noter que l'obtention d'un fort débit au début du remplissage et un faible débit vers la fin du remplissage est obtenu spontannément lorsque la source de gaz est unique, par exemple un réservoir sous pression (la source se vide et en effet voit sa pression diminuer). Néanmoins, afin de limiter l'échauffement et pour des raisons économiques, la source de gaz est constituée en pratique d'un ensemble des sources à des pressions différentes. Cette situation oblige à effectuer un contrôle actif du remplissage afin d'obtenir un remplissage avec la variation de débit souhaité. Une courbe de remplissage peut être schématiquement représentée dans un plan XY dans lequel l'axe X est le temps de remplissage, exprimé comme pourcentage du temps total et l'axe Y comme la masse de gaz transféré, exprimé comme pourcentage de la variation total de masse souhaité. Du fait que le volume du réservoir de destination est constant, la densité dans le réservoir rempli peut être utilisée comme mesure en lieu de la masse. Du fait que les variations de température sont relativement plus faibles que les variations de pression, il est important de signaler que cette courbe ne diffère pas beaucoup de celle de la variation de la pression en fonction du temps.

L'invention concerne donc un procédé de remplissage d'un conteneur de gaz sous pression P₂ à partir d'au moins une source de gaz sous pression P₁, P₁ étant supérieure à P₂, ledit conteneur et ladite au moins une source de gaz étant reliés par un conduit permettant le passage du gaz de l'un à l'autre, caractérisé en ce que le remplissage s'effectue à un débit qui, en fin de remplissage, est inférieur au débit initial.

Plus particulièrement, l'invention concerne un procédé de remplissage tel que définit à la revendication 1.

La Figure 4 illustre un tel exemple de diagramme XY, pour des types des réservoirs couramment utilisés pour des remplissages rapides. Deux courbes respectivement « Limite inférieure » et « Limite supérieure » délimitent la zone où remplissage dit optimal.

La figure 5 illustre un tableau détaillant des valeurs de masse transférée (en fonction du temps) associées à ces limites. A titre de repère, la courbe X=Y est également représentée en traits mixtes à la figure 4. Cette courbe X=Y est très proche de celle correspondant à un remplissage avec une rampe de pression constante.

La courbe en pointillés montre un exemple de remplissage ou l'évolution est optimale et obtenue approximativement par l'application de deux débits, le premier fort (40% de la masse transfère dans les 20% premiers temps du temps total de remplissage) et le deuxième débit plus faible.

Par « conteneur de gaz sous pression » au sens de l'invention, on entend tout réservoir de gaz, notamment du type citerne, réservoir mobile, et surtout réservoir de véhicule, nécessitant d'être rempli rapidement, et permettant le maintien du gaz sous pression. Dans un mode de réalisation particulier de l'invention, on entend par « conteneur de gaz sous pression » un ensemble de réservoirs, comme notamment plusieurs bouteilles de gaz disposées en parallèle, de contenances identiques ou différentes.

Par « source de gaz sous pression » au sens de l'invention, on entend toute source disponible à l'homme de l'art, du type gazoduc, citerne de raffineries, camion citerne, stockage d'hydrogène à base d'hydrures, circuit de refoulement d'un compresseur, ou encore citerne de station service, susceptible de constituer une source d'alimentation en gaz pour un conteneur de gaz sous pression selon l'invention. Dans un mode de réalisation particulier de l'invention, on entend par « source de gaz sous pression » un ensemble de sources de gaz sous pression, comme notamment une suite de réservoirs de pressions croissantes, ou encore des réservoirs pressurisés par un ou plusieurs compresseurs.

En d'autres termes, on désigne par « conteneur de gaz sous pression » tout conteneur susceptible d'être rempli de gaz, et par « source de gaz sous pression » toute source de gaz susceptible de remplir un conteneur.

Par « conduit permettant le passage du gaz de l'un à l'autre » on entend tout type de conduit utilisé par l'homme de l'art pour le transport du gaz d'une source de gaz à un conteneur. En particulier, on entend des conduits susceptibles de supporter des pressions élevées.

Par « débits de remplissage » au sens de l'invention, on entend une quantité de gaz venant remplir le conteneur par unité de temps.

Selon l'invention, le remplissage du conteneur se fait avec des débits décroissants, c'est-à-dire que l'on remplit le conteneur de gaz sous pression avec un débit plus important en début de remplissage qu'en fin de remplissage : D1>D2>D3>D4>D5...>Di. La première étape de remplissage est réalisée avec un débit D1 pendant un temps t1, la deuxième étape avec un débit D2 pendant un temps t2, etc.... En d'autres termes, le débit de remplissage est fort en début de remplissage, puis on diminue le débit de remplissage, ce qui permet d'éviter une augmentation trop importante de la pression du gaz à l'intérieur du conteneur sous pression et une augmentation de la température du gaz à l'intérieur de celui-ci au-delà de la température maximale tolérée par le réservoir. De plus, ce procédé de remplissage par régulation de débit offre l'avantage d'être aisé à mettre en oeuvre et d'être peu onéreux.De manière préférée, le procédé de remplissage tel que décrit précédemment comprend 2 à 20 étapes successives de remplissage à l'aide de débits de remplissage décroissants D₁ à D₂₀ pendant des temps t₁ à t₂₀, la somme des temps t₁ à t₂₀ étant comprise entre 1 et 7 minutes, préférentiellement entre 1 min 30s et 5 minutes, plus préférentiellement entre 2 et 4 minutes.

Dans un mode de réalisation particulier, le procédé de remplissage tel que décrit précédemment ne comprend que deux étapes successives de remplissage dont une première étape de remplissage à l'aide d'un débit D₁ pendant un temps t₁ et une deuxième étape de remplissage à l'aide d'un débit D₂ pendant un temps t₂, avec D₁>D₂, la somme des temps t₁ + t₂ étant comprise entre 1 et 7 minutes, préférentiellement entre 1 min et 30s et 5 minutes, plus préférentiellement entre 2 et 4 minutes.

Dans un autre mode de réalisation particulier, le procédé de remplissage tel que décrit précédemment comprend trois étapes successives de remplissage dont une première étape de remplissage à l'aide d'un débit D₁ pendant un temps t₁, une deuxième étape de remplissage à l'aide d'un débit D₂ pendant un temps t₂, et une troisième étape de remplissage à l'aide d'un débit D₃ pendant un temps t₃, avec D₁>D₂>D₃, la somme des temps t₁ + t₂ + t₃ étant comprise entre 1 et 7 minutes, préférentiellement entre 1 min 30s et 5 minutes, plus préférentiellement entre 2 et 4 minutes.

Dans un mode de réalisation de l'invention, le procédé de remplissage tel que décrit précédemment est caractérisé en ce que les étapes successives de remplissage sont réalisées à l'aide de débits décroissants successifs, présentant chacun un taux de décroissance différent.

La succession de débits différents décroissants telle que décrite précédemment, permet en pratique de s'approcher au plus près de la courbe optimale des débits, c'est-à-dire du temps de remplissage le plus court. Ainsi, le temps ti de chaque étape de remplissage sera apprécié par l'homme du métier. Les temps ti peuvent être identiques mais ils peuvent également être différents.

Dans un mode de réalisation particulier de l'invention, le procédé de remplissage tel que décrit précédemment peut être associé à un refroidissement de l'installation de remplissage. En effet, il est possible d'améliorer encore la rapidité de remplissage en diminuant un peu plus la température du gaz dans le conteneur sous pression. Ainsi, l'invention comprend également un procédé tel que décrit précédemment dans lequel tout ou partie de l'installation est refroidie. En particulier, la source de gaz, et/ou le conteneur, et/ou le conduit reliant la source de gaz au conteneur peut(vent) être refroidi(s). Pour des raisons pratiques, dans un mode de réalisation avantageux, le gaz est refroidi pendant le remplissage grâce à un échangeur de chaleur situé dans le circuit de remplissage.

Selon l'invention, on peut contrôler le débit de remplissage par tout organe connu par l'homme de l'art pour réguler un débit. En particulier, le débit peut être mesuré par un débitmètre à effet Coriolis, une différence de pression dans une résistance à l'écoulement du gaz dans le conduit ou une variation de masse dans le temps. Avec l'aide de modèles mathématiques il est également possible d'estimer le débit en fonction des valeurs et/ou variations de valeurs d'autres variables du procédé que sont facilement mesurables, en particulier des pressions. Ainsi, la diminution de la pression dans un réservoir ou le gaz est prélevé et/ou l'augmentation de la pression dans le conteneur du gaz sur pression permet de calculer le débit transféré, en étant ce calcul plus précis encore si on mesure les températures. Dans un mode réalisation du procédé selon l'invention, le débit de remplissage dudit conteneur est régulé à l'aide d'une vanne tout ou rien placée sur ledit conduit permettant le passage du gaz.

Par « vanne tout ou rien » au sens de l'invention, on entend un dispositif permettant de réguler de façon discrète le débit de fluide traversant ledit conduit, caractérisé en ce qu'il ne comprend que deux états, soit ouvert, c'est-à-dire qu'il laisse passer tout le fluide, soit fermé, c'est-à-dire qu'aucun fluide ne le traverse.

Dans ce mode de réalisation, le débit est régulé par ouvertures et fermetures successives de la vanne tout ou rien. Pour obtenir un débit élevé les phases d'ouverture de la vanne seront plus longues que les phases de fermeture. A l'inverse, pour obtenir un débit plus réduit, les phases de fermeture de la vanne seront plus longues que les phases d'ouverture. Par ailleurs, dans ce mode de réalisation, l'ouverture et la fermeture de la vanne tout ou rien peuvent dépendre de la mesure de débit moyen, de la pression dans le conteneur de gaz sous pression, et/ou dans la source de gaz, et/ou dans le conduit reliant la source au conteneur. Ainsi, on peut utiliser la mesure instantanée du débit, qui est calculée dans une fenêtre temporelle donnée, en considérant aussi les fractions du temps où le débit est zéro, de façon à obtenir un débit moyen pour une fenêtre de temps particulière. Par exemple, si ce débit moyen est plus important que le débit désiré, la vanne restera fermée plus longtemps qu'ouverte. En particulier, on peut mesurer l'augmentation de pression dans le conteneur au cours du temps, et/ou la diminution de pression de la source de gaz au cours du temps. Par exemple, si la pression augmente de manière trop importante dans le conteneur, le débit de remplissage doit être diminué et donc la vanne restera fermée plus longtemps qu'ouverte. Cette régulation peut se faire de manière manuelle par un opérateur, mais il est bien évident que l'on préférera utiliser un système de contrôle automatisé, estimant ou mesurant le débit transféré, la pression dans le conteneur de gaz, la source de gaz, et/ou le conduit reliant la source au conteneur, et ordonnant l'ouverture ou la fermeture de la vanne selon qu'il soit nécessaire d'augmenter ou de diminuer le débit de remplissage. Dans ce mode de réalisation, l'opérateur applique comme consigne une série de rampes de débit et peut s'approcher au mieux de la courbe optimale des débits.

Dans un autre mode de réalisation du procédé selon l'invention, le débit de remplissage dudit conteneur est régulé à l'aide d'une vanne de régulation à débit variable placée sur ledit conduit permettant le passage du gaz.

Par « vanne de régulation à débit variable », on entend au sens de l'invention un dispositif permettant de réguler de façon analogique le débit de fluide traversant ledit conduit, caractérisé en ce que son niveau d'ouverture et de fermeture peut être régulé de manière graduelle. Pour obtenir un débit fort l'opérateur ouvre la vanne complètement, et pour diminuer celui-ci il ferme plus ou moins la vanne.

Ce mode de réalisation peut comprendre en outre la mesure directe de la température du gaz à l'intérieur du conteneur de gaz sous pression, ce qui permet de s'approcher du débit de remplissage optimal en ligne grâce au maintien de la température à sa valeur maximale tolérée par le conteneur. Dans ce mode de réalisation le débit est régulé par tout organe connu par l'homme de l'art, en particulier par régulateur avec action Proportionnelle, Intégrale et Dérivative, constante ou variable, ou PID. En effet, le PID peut comporter des paramètres (à action proportionnelle, intégrale ou dérivative) constants et/ou variables de sorte à compenser les non-linealités du système.

Par ailleurs, dans un autre type de régulation, la vanne de régulation à débit variable peut être contrôlée à l'aide d'un régulateur avec action de type prédictive. Par « action de type prédictive » on entend notamment des algorithmes de contrôle basés sur des modèles, permettant de prédire l'évolution du système et d'appliquer un débit toujours adéquat afin de diminuer le risque de dépasser la température maximale.

Dans l'idéal, on préférera utiliser un système de contrôle avancé encore plus complet, en réalisant une optimisation du débit au fur et à mesure du remplissage via l'utilisation d'un modèle mathématique : on calcule la courbe optimale de débits en fonction notamment de la forme et des dimensions du conteneur et de l'information actualisée sur les conditions du gaz à l'entrée et on fait ensuite varier les débits pour suivre cette courbe et obtenir le temps de remplissage le plus court. En pratique, il peut être difficile de mettre en oeuvre une telle régulation très fine. Pour cette raison, on peut procéder de préférence via des rampes successives de débits, de manière à s'approcher au mieux de la courbe optimale des débits définie au préalable.

Toujours dans un autre mode de réalisation du procédé selon l'invention, le débit de remplissage dudit conteneur est régulé à l'aide d'un ensemble de vannes tout ou rien de débits différents placées en parallèle et branchées sur ledit conduit permettant le passage du gaz, de sorte qu'à une vanne tout ou rien corresponde un débit particulier, et que l'on commande l'ouverture et/ou la fermeture de l'une ou l'autre des vannes en fonction du débit de remplissage souhaité.

Dans ce mode de réalisation particulier, le conduit permettant le passage du gaz alimente les différentes vannes tout ou rien placées en parallèle. Chacune des vannes possède un débit de remplissage propre, plus ou moins important. Ainsi, selon la vanne ouverte, le débit de remplissage sera différent. De préférence une seule vanne est ouverte à la fois, mais dans le but d'obtenir de hauts débits, il est possible d'ouvrir plusieurs vannes en même temps, de manière à combiner plusieurs débits de remplissage pour obtenir un débit final plus important correspondant à la somme des débits de remplissage de chaque vanne ouverte. Ainsi, en suivant ce mode de réalisation particulier, l'opérateur est à même d'appliquer une série de rampes de débits différents décroissants au cours du temps, de sorte à s'approcher au mieux de la courbe optimale de débits.

Dans un autre mode de réalisation, le débit de remplissage est régulé à l'aide de la variation de la fréquence de l'alimentation électrique d'un compresseur, ou alors à l'aide de la variation de la fréquence de l'alimentation pneumatique d'un compresseur.

Dans encore un autre mode de réalisation particulier de l'invention, le débit de remplissage du conteneur est ajusté en fonction de la température du conteneur, laquelle peut être mesurée ou estimée par tout organe connu par l'homme de l'art.

La présente invention sera mieux comprise à la lecture de la description détaillée de modes de réalisation particuliers et d'exemples non limitatifs et donnés dans un seul but illustratif.

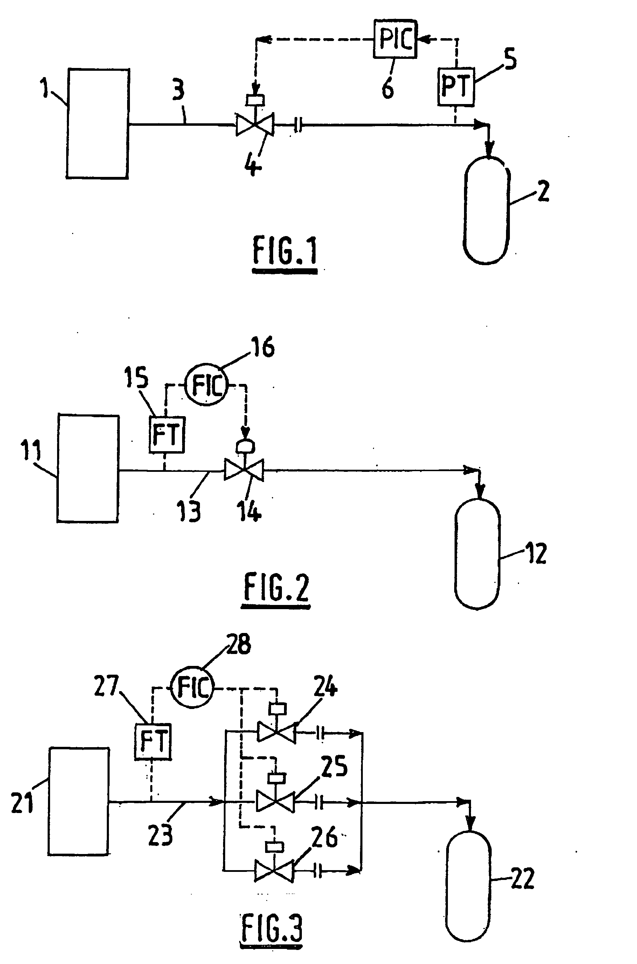

Les figures 1, 2 et 3 représentent des installations pour la mise en oeuvre de modes de réalisation particuliers du procédé selon l'invention.

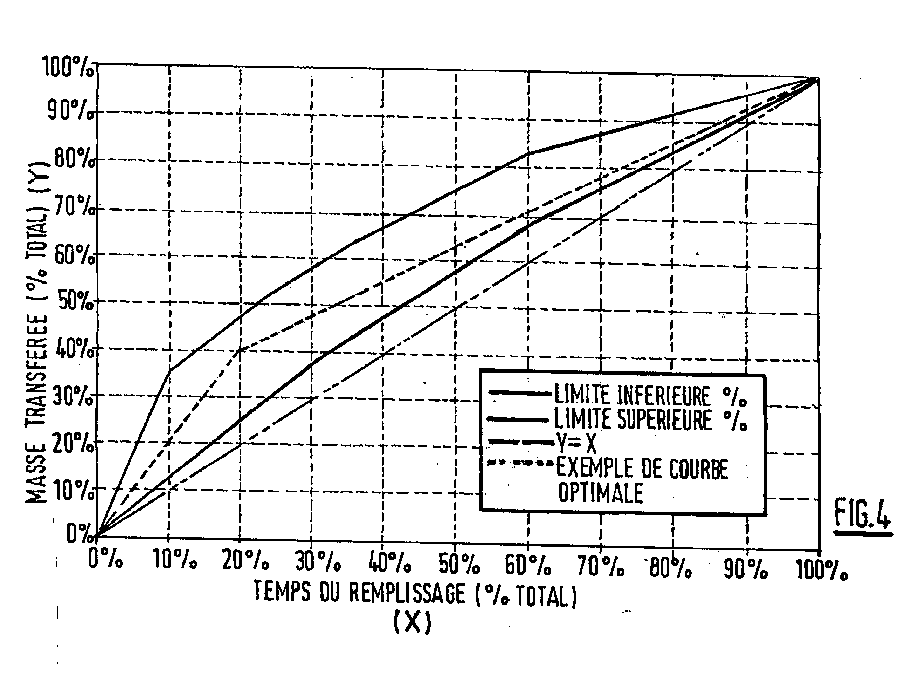

La figure 4 illustre un exemple de remplissage rapide optimisé en temps (masse transférée en fonction du temps).

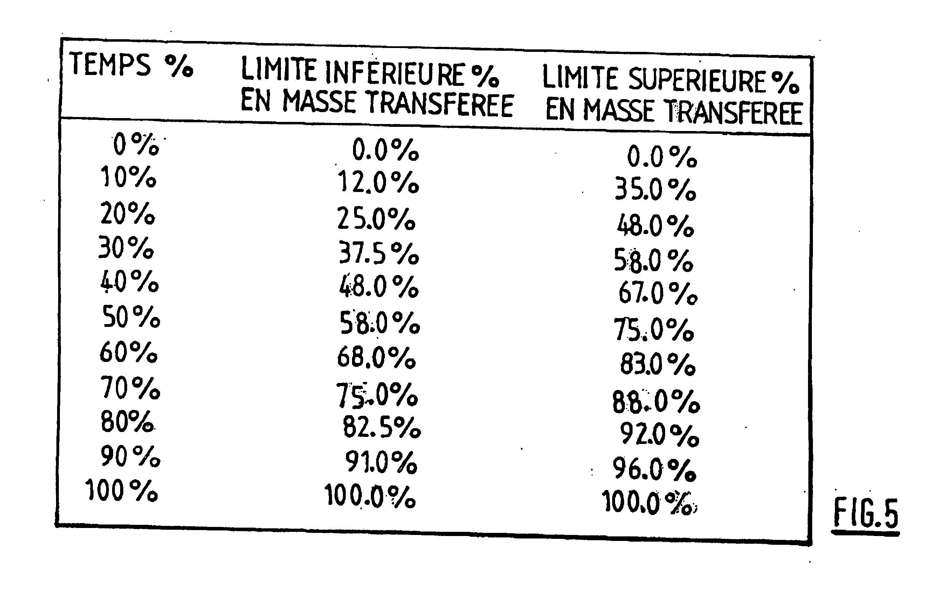

La figure 5 représente un tableau détaillant des exemples de valeurs de masse transférée (en fonction du temps) associées à des limites supérieure et inférieure délimitant un remplissage optimisé en temps.

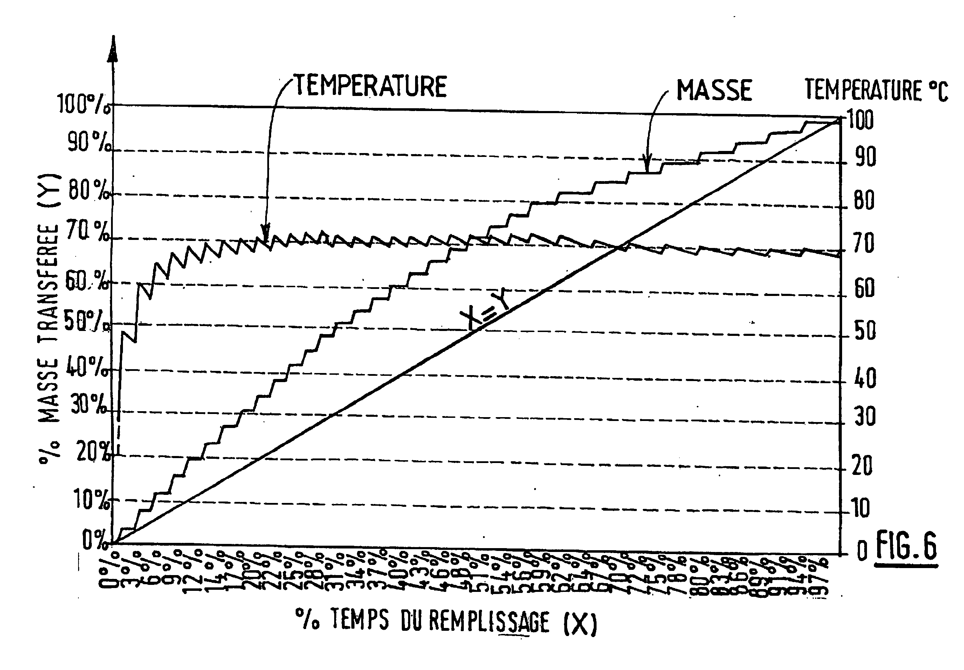

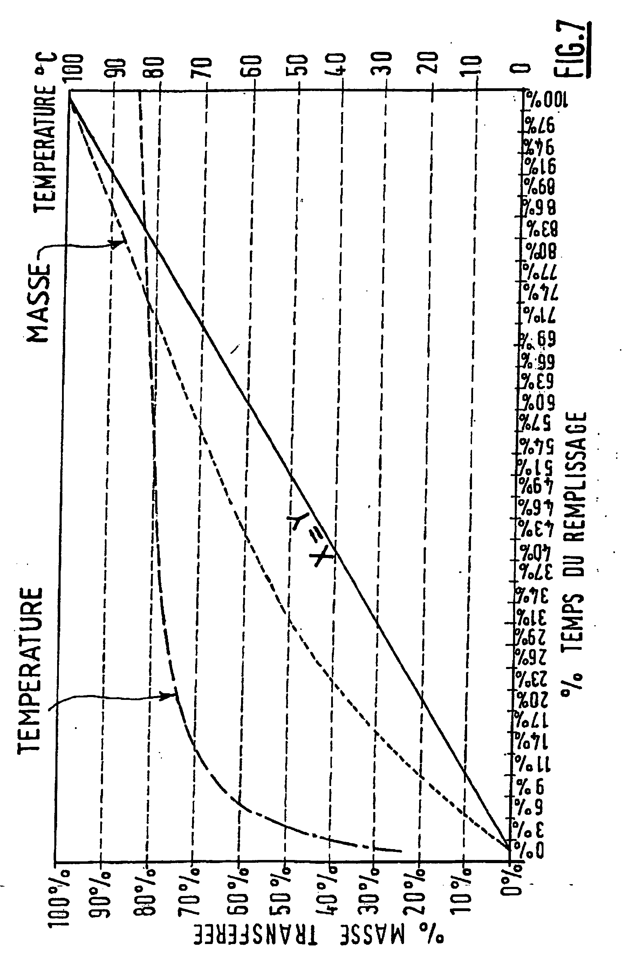

Les figures 6 et 7 La illustrent l'évolution de la masse transférée et la température lors respectivement de deux exemples de remplissage selon l'invention.

La figure 1 représente une installation pour la mise en oeuvre d'un procédé de remplissage d'un conteneur 2 de gaz sous pression P₂ à partir d'une source de gaz 1 sous pression P₁ supérieure à P₂, ledit conteneur 2 et ladite source de gaz 1 étant reliés par un conduit 3 permettant le passage du gaz de l'un à l'autre. Le débit de remplissage alimentant en gaz le conteneur 2 est régulé à l'aide d'une vanne tout ou rien 4 placée sur ledit conduit 3. L'ouverture et la fermeture de cette vanne tout ou rien 4 est fonction du débit moyen assimilé à l'augmentation de la pression P2 du conteneur 2 de gaz sous pression, laquelle est estimée par la mesure de la pression dans le conduit d'alimentation 3 à l'entrée du conteneur 2 à l'aide d'un système de transmission de la pression 5 (PT = Pressure Transmiter) couplé à un indicateur de pression 6 (PIC = Pressure Indicator Controller) contrôlant l'ouverture et la fermeture de la vanne 4.

La figure 2 représente une installation pour la mise en oeuvre d'un procédé de remplissage d'un conteneur 12 de gaz sous pression P₂ à partir d'une source de gaz 11 sous pression P₁ supérieure à P₂, ledit conteneur 12 et ladite source de gaz 11 étant reliés par un conduit 13 permettant le passage du gaz de l'un à l'autre. Le débit de remplissage alimentant en gaz le conteneur 12 est régulé à l'aide d'une vanne 14 de régulation à débit variable placée dans ledit conduit permettant le passage du gaz. L'ouverture et la fermeture de cette vanne de régulation 14 est fonction du débit du transfert du gaz , lequel est mesuré à l'aide d'un système de transmission du débit 15 (FT = Flow Transmiter) couplé à un indicateur de débit 16 (FIC = Flow Indicator Controller) contrôlant l'ouverture et la fermeture de la vanne 14.

La figure 3 représente une installation pour la mise en oeuvre d'un procédé de remplissage d'un conteneur 22 de gaz sous pression P₂ à partir d'une source de gaz 21 sous pression P₁ supérieure à P₂, ledit conteneur 22 et ladite source de gaz 21 étant reliés par un conduit 23 permettant le passage du gaz de l'un à l'autre. Le débit de remplissage alimentant en gaz le conteneur 22 est régulé à l'aide d'un ensemble de trois vannes tout ou rien 24, 25, 26 de débits différents placées en parallèle et branchées sur ledit conduit 23, de sorte qu'à une vanne tout ou rien 24, 25, 26 corresponde un débit particulier, et que l'on commande l'ouverture et/ou la fermeture de chaque vanne en fonction du débit de remplissage, lequel est mesuré à l'aide d'un système de transmission du débit 27 (FT = Flow transmiter) couplé à un indicateur de débit 28 (FIC = Flow Indicator Controller) contrôlant l'ouverture et la fermeture des vannes 24, 25, 26.

### EXEMPLES

EXEMPLE 1 : Remplissage d'un conteneur de gaz par remplissage successifs et régulation discrète

On a rempli une bouteille de type III (composite avec *liner* d'aluminium) de 47 Litres sous pression avec 1,08kg d'hydrogène sans dépasser une température maximale de 72°C.

Pour cela on a utilisé comme source d'hydrogène sous pression un collecteur, maintenu à une pression égale à 400 bar et à une température égale à 25°C.

On a procédé au remplissage de la bouteille en suivant deux protocoles différents.

Le premier protocole correspond à un remplissage classique, consistant en un remplissage à débit moyen constant de 5.1 g/s , le débit étant ici assimilé à la montée en pression ( 118 bar/min), plus facile à mesurer, avec une montée en pression linéaire du gaz dans la bouteille, à l'aide d'une vanne tout ou rien dont le rythme d'ouverture et fermeture varie de manière à faire monter de façon linéaire la pression dans la bouteille grâce aux coups de débits. La montée en pression utilisée correspondait au débit constant maximum applicable pour remplir la bouteille de gaz en entier sans dépasser la température maximale de 72°C. En suivant ce protocole, on a effectué le remplissage de la bouteille en 3,1 minutes, et on a atteint la température maximale de 72°C dans la bouteille.

On a ensuite réalisé le même remplissage dans des conditions différentes en appliquant 3 valeurs de débits successives selon le procédé de l'invention. Comme dans le cas précédent, ces valeurs de débits on été assimilées à des montées en pression. On a appliqué un premier débit D1 correspondant à 220 bar/min (10.6 g/s), puis un deuxième débit correspondant à 150 bar/min (6.8 g/s) et enfin un troisième débit correspondant à 80 bar/min (3.2 g/s). En suivant ce protocole, la pression dans la bouteille monte régulièrement de façon linéaire par intervalles grâce aux coups de débit, de façon à approximer la courbe non-linéaire optimale de remplissage. La température maximale a quant à elle été atteinte rapidement mais maintenue tout au long du remplissage. Enfin, le remplissage complet de la bouteille a été obtenu après seulement 2,5 minutes.

Ainsi, le gain de temps est considérable : le gaz est transféré 25% plus vite que dans un procédé classique. La figure 6 montre l'évolution de la masse transférée et la température au long du remplissage pour cet exemple.

### EXEMPLE 2 : Remplissage d'un conteneur de gaz par remplissage successifs et régulation analogique

On a rempli une bouteille de type IV (composite avec *liner* en polymère) de 36 Litres sous pression avec 1,4kg d'hydrogène sans dépasser une température maximale de 85°C.

Pour cela on a utilisé comme source d'hydrogène sous pression un collecteur, maintenu à une pression égale à 900 bar et à une température égale à -20°C.

On a procédé au remplissage de la bouteille en suivant deux protocoles différents.

Le premier protocole correspond à un remplissage classique, consistant en un remplissage à débit constant de 5,95 g/s, avec une montée en pression approximativement linéaire du gaz dans la bouteille, à l'aide d'une vanne analogique. Le débit de 5,95 g/s correspondait au débit constant maximum applicable pour remplir la bouteille de gaz en entier sans dépasser la température maximale de 85°C. En suivant ce protocole, on a effectué le remplissage de la bouteille en 195 secondes, et on a atteint la température maximale de 85°C dans la bouteille.

On a ensuite réalisé le même remplissage dans des conditions différentes en appliquant 3 rampes de débits successives selon le procédé de l'invention. On a appliqué un débit initial de 14,4 g/s, avec un taux de décroissance de 60% par minute pendant 65 secondes, puis un deuxième taux de décroissance de débit de 8,6 %/min pendant 65 secondes et enfin un troisième taux de décroissance de débit 1,3%/min jusqu'à la fin du remplissage. La température maximale a été atteinte rapidement mais maintenue tout au long du remplissage. Enfin le remplissage complet de la bouteille a été obtenu après seulement 175 secondes.

Ainsi, le gain de temps est considérable : le gaz est transféré 10% plus vite. La figure 7 montre l'évolution de la masse transfère et la température au long du remplissage pour cet exemple.

## Revendications

1. Procédé de remplissage d'un conteneur (2) de gaz sous pression P₂ à partir d'au moins une source (1) de gaz sous pression P₁, P₁ étant supérieure à P₂, ledit conteneur (2) et ladite au moins une source (1) de gaz étant reliés par un conduit (3) permettant le passage du gaz de l'un à l'autre, le remplissage s'effectuant à un débit qui est, en fin de remplissage, inférieur au débit initial, le procédé comprenant plusieurs étapes successives de remplissage 1 à i, chacune des étapes étant conduite à l'aide d'un débit de remplissage D1 à Di pendant un temps t1 à ti, i étant un nombre entier supérieur ou égal à 2, le débit d'une étape i-1 étant supérieur au débit de l'étape i, **caractérisé en ce qu'**il comprend trois étapes successives de remplissage dont une première étape de remplissage à l'aide d'un débit D₁ pendant un temps t₁, une deuxième étape de remplissage à l'aide d'un débit D₂ pendant un temps t₂, et une troisième étape de remplissage à l'aide d'un débit D₃ pendant un temps t₃, avec D₁>D₂>D₃, la somme des temps t₁ + t₂ + t₃ étant comprise entre 1 et 7 minutes, préférentiellement entre 1 min 30s et 5 minutes, plus préférentiellement entre 2 et 4 minutes, et **en ce que** les étapes successives de remplissage 1 à i sont dimensionnées en terme de débit et de durée pour produire un échauffement contrôlé du conteneur (2) maximisant la dissipation de chaleur dans ledit conteneur (2) sans pour autant augmenter la température à l'intérieur du conteneur (2) au-delà de la température maximale toléré par le réservoir, le débit de remplissage étant ajusté en fonction de la température mesurée ou estimée du conteneur (2).

2. Procédé de remplissage selon la revendication 1, **caractérisé en ce que** les étapes successives de remplissage sont réalisées à l'aide de débits décroissants successifs, présentant chacun un taux de décroissance différent.

3. Procédé de remplissage selon l'une quelconque des revendication 1 ou 2, **caractérisé en ce que** la source de gaz, et/ou le conteneur, et/ou le conduit permettant le passage du gaz de l'un à l'autre est (sont) refroidi(s).

4. Procédé de remplissage selon l'une quelconque des revendications 1 à 3, **caractérisé en ce que** le débit de remplissage dudit conteneur est régulé à l'aide d'une vanne tout ou rien placée sur ledit conduit permettant le passage du gaz.

5. Procédé de remplissage selon l'une quelconque des revendications 1 à 4, **caractérisé en ce que** le débit de remplissage dudit conteneur est régulé à l'aide d'une vanne de régulation à débit variable placée sur ledit conduit permettant le passage du gaz.

6. Procédé de remplissage selon la revendication 5, **caractérisé en ce que** la vanne de régulation à débit variable est contrôlée à l'aide d'un régulateur avec action proportionnelle, intégrale et dérivative, constante ou variable.

7. Procédé de remplissage selon la revendication 5, **caractérisé en ce que** la vanne de régulation à débit variable est contrôlée à l'aide d'un régulateur avec action de type prédictive.

8. Procédé de remplissage selon l'une quelconque des revendications 1 à 3, **caractérisé en ce que** le débit de remplissage dudit conteneur est régulé à l'aide d'un ensemble de vannes tout ou rien de sections d'ouverture différentes placées en parallèle sur ledit conduit permettant le passage du gaz.

9. Procédé de remplissage selon l'une quelconque des revendications 1 à 3, **caractérisé en ce que** le débit de remplissage dudit conteneur est régulé à l'aide de la variation de la fréquence de l'alimentation électrique d'un compresseur ou à l'aide de la variation de la fréquence de l'alimentation pneumatique d'un compresseur.

10. Procédé selon l'une quelconque des revendications 1 à 9, **caractérisé en ce que** la première des étapes successives de remplissage est conformée pour atteindre, sans la dépasser, une température de gaz à l'intérieur de conteneur égale à la valeur maximale tolérée par le conteneur.

11. Procédé selon la revendication 10 **caractérisé en ce que** les étapes de remplissage suivantes (après la première) sont conformées pour maintenir la température de gaz à l'intérieur de conteneur égale à la valeur maximale tolérée par le conteneur.

12. Procédé selon l'une quelconque des revendications 1 à 11, **caractérisé en ce qu'**il comporte une étape de calcul d'une courbe optimale de débits de remplissage en fonction du temps, ladite courbe optimale étant calculée au préalable pour obtenir un temps total de remplissage minimisé, en fonction : des caractéristiques du réservoir (géométrie et/ou résistance thermique), des conditions ambiantes (notamment température ambiante), des conditions du gaz source (notamment pression, température du gaz de remplissage), et des contraintes éventuelles (notamment température maximale de la paroi du réservoir admissible, débit maximum de remplissage possible).

13. Procédé de remplissage selon l'une quelconque des revendication 1 à 12, **caractérisé en ce qu'**il comporte une étape de calcul d'une courbe optimale de débits de remplissage en fonction du temps, ladite courbe optimale étant calculée au préalable pour obtenir un temps total de remplissage minimisé, la courbe de remplissage étant située entre deux courbes limites respectivement « limite inférieure » et « limite supérieure » calculées et correspondant à des masses de gaz transférée relativement à un temps de remplissage conformes aux valeurs ci-dessous :
| Temps de remplissage en pourcentage par rapport au temps total : | Limite inférieure en pourcentage de la masse totale transférée : | Limite supérieure en pourcentage de la masse totale transférée : |
|---|---|---|
| 0 | 0 | 0 |
| 10 | 12 | 35 |
| 20 | 25 | 48 |
| 30 | 37.5 | 58 |
| 40 | 48 | 67 |
| 50 | 58 | 75 |
| 60 | 68 | 83 |
| 70 | 75 | 88 |
| 80 | 82.5 | 92 |
| 90 | 91 | 96 |
| 100 | 100 | 100 |

## Claims

1. Method of filling a container (2) with gas to a pressure P₂ from at least one gas source (1) at a pressure P₁, P₁ being greater than P₂, said container (2) and said at least one gas source (1) being connected via a line (3) enabling the gas to pass from one to the other, the filling taking place at a flow rate which, at the end of filling, is lower than the initial flow rate, the method comprising several successive filling steps 1 to i, each of the steps being carried out with a filling flow rate D1 to Di for a time t1 to ti, i being an integer equal to or greater than 2, the flow rate of step i-1 being higher than the flow rate of step i, **characterized in that** it comprises three successive filling steps, the first filling step of which with a flow rate D₁ for a time t₁, the second filling step with a flow rate D₂ for a time t₂ and the third filling step with a flow rate D₃ for a time t₃, where D₁ > D₂ > D₃, the sum of the times t₁ + t₂ + t₃ being between 1 and 7 minutes, preferably between 1 minute 30 seconds and 5 minutes and more preferably between 2 and 4 minutes, and **in that** the successive filling steps 1 to i are designed in terms of flow rate and duration so as to produce controlled heating of the container (2), maximizing the heat dissipation in said container (2) without correspondingly increasing the temperature inside the container (2) above the maximum temperature tolerated by the tank, the filling flow rate being adjusted according to the measured or estimated temperature of the container (2).

2. Filling method according to Claim 1, **characterized in that** the successive filling steps are carried out with successive decreasing flow rates, each having a different rate of decrease.

3. Filling method according to either of Claims 1 and 2, **characterized in that** the gas source and/or the container and/or the line enabling the gas to pass from one to the other are/is cooled.

4. Filling method according to any one of Claims 1 to 3, **characterized in that** the rate at which said container is filled is regulated using an on/off valve placed on said line enabling the gas to pass.

5. Filling method according to any one of Claims 1 to 4, **characterized in that** the rate at which said container is filled is regulated using a variable-flow regulating valve placed on said line enabling the gas to pass.

6. Filling method according to Claim 5, **characterized in that** the variable-flow regulating valve is controlled using a PID (proportional, integral, derivative) regulator of constant or variable action.

7. Filling method according to Claim 5, **characterized in that** the variable-flow regulating valve is controlled using a regulator with predictive action.

8. Filling method according to any one of Claims 1 to 3, **characterized in that** the rate at which said container is filled is regulated using a set of on/off valves having different flow cross sections placed in parallel on said line enabling the gas to pass.

9. Filling method according to any one of Claims 1 to 3, **characterized in that** the rate at which said container is filled is regulated using the variation in the frequency of the electrical supply for a compressor or using the variation in the frequency of the pneumatic supply for a compressor.

10. Method according to any one of Claims 1 to 9, **characterized in that** the first of the successive filling steps is designed so as to achieve, without exceeding it, a gas temperature inside the container equal to the maximum value tolerated by the container.

11. Method according to Claim 10, **characterized in that** the following filling steps (after the first step) are designed to keep the gas temperature inside the container equal to the maximum value tolerated by the container.

12. Method according to any one of Claims 1 to 11, **characterized in that** it includes a step of calculating an optimum filling rate curve as a function of time, said optimum curve being calculated beforehand in order to obtain a minimized total filling time, as a function of: the characteristics of the tank (geometry and/or thermal resistance); the ambient conditions (especially the ambient temperature); the conditions of the source gas (especially the pressure and temperature of the filling gas); and any constraints (especially the maximum permissible wall temperature of the tank and the maximum fill rate possible).

13. Filling method according to any one of Claims 1 to 12, **characterized in that** it includes a step of calculating an optimum filling rate curve as a function of time, said optimum curve being calculated beforehand in order to obtain a minimized total filling time, the filling curve lying between two limit curves, the "lower limit" and the "upper limit" respectively, which are calculated and correspond to gas masses transferred relative to a filling time in accordance with the values below:
| Filling time as a percentage of the total time | Lower limit as a percentage of the total transferred mass | Upper limit as a percentage of the total transferred mass |
|---|---|---|
| 0 | 0 | 0 |
| 10 | 12 | 35 |
| 20 | 25 | 48 |
| 30 | 37.5 | 58 |
| 40 | 48 | 67 |
| 50 | 58 | 75 |
| 60 | 68 | 83 |
| 70 | 75 | 88 |
| 80 | 82.5 | 92 |
| 90 | 91 | 96 |
| 100 | 100 | 100 |

## Patentansprüche

1. Verfahren zum Befüllen eines Gasbehälters (2), der unter einem Druck P₂ steht, anhand wenigstens einer Gasquelle (1), die unter einem Druck P₁ steht, wobei P₁ größer ist als P₂, wobei der Behälter (2) und die wenigstens eine Gasquelle (1) durch eine Leitung (3) verbunden sind, die den Durchgang von Gas zwischen ihnen ermöglicht, wobei das Befüllen mit einem Durchsatz erfolgt, der am Ende des Befüllens kleiner als der anfängliche Durchsatz ist, wobei das Verfahren mehrere aufeinander folgende Befüllungsschritte 1 bis i umfasst, wobei jeder der Schritte mit Hilfe eines Befüllungsdurchsatzes D1 bis Di während einer Zeit t1 bis ti ausgeführt wird, wobei i eine ganze Zahl größer oder gleich 2 ist, wobei der Durchsatz eines Schrittes i - 1 größer als der Durchsatz des Schrittes i ist, **dadurch gekennzeichnet, dass** es drei aufeinander folgende Befüllungsschritte umfasst, wovon ein erster Befüllungsschritt mit Hilfe eines Durchsatzes D₁ während einer Zeit t₁ erfolgt, ein zweiter Befüllungsschritt mit Hilfe eines Durchsatzes D₂ während einer Zeit t₂ erfolgt und ein dritter Befüllungsschritt mit Hilfe eines Durchsatzes D₃ während einer Zeit t₃ erfolgt, wobei D₁ > D₂ > D₃, wobei die Summe der Zeiten t₁ + t₂ + t₃ im Bereich von 1 bis 7 Minuten, vorzugsweise zwischen 1 Minute 30 Sekunden und 5 Minuten, stärker bevorzugt im Bereich von 2 bis 4 Minuten liegt, und dass die aufeinander folgenden Befüllungsschritte 1 bis i hinsichtlich Durchsatz und Dauer so bemessen sind, dass eine kontrollierte Erwärmung des Behälters (2) erzeugt wird, die die Wärmeabführung in dem Behälter (2) maximal macht, ohne dass die Temperatur innerhalb des Behälters (2) über die für den Vorratsbehälter tolerierte Maximaltemperatur hinaus erhöht wird, wobei der Befüllungsdurchsatz als Funktion der gemessenen oder geschätzten Temperatur des Behälters (2) eingestellt wird.

2. Befüllungsverfahren nach Anspruch 1, **dadurch gekennzeichnet, dass** die aufeinander folgenden Befüllungsschritte mit Hilfe sukzessive abnehmender Durchsätze ausgeführt werden, die jeweils einen unterschiedlichen Abnahmebetrag aufweisen.

3. Befüllungsverfahren nach einem der Ansprüche 1 oder 2, **dadurch gekennzeichnet, dass** die Gasquelle und/oder der Behälter und/oder die Leitung, die den Durchgang von Gas zwischen ihnen ermöglicht, gekühlt werden.

4. Befüllungsverfahren nach einem der Ansprüche 1 bis 3, **dadurch gekennzeichnet, dass** der Befüllungsdurchsatz des Behälters mit Hilfe eines Ein/Aus-Ventils reguliert wird, das in der Leitung, die den Durchgang von Gas ermöglicht, angeordnet ist.

5. Befüllungsverfahren nach einem der Ansprüche 1 bis 4, **dadurch gekennzeichnet, dass** der Befüllungsdurchsatz des Behälters mit Hilfe eines Regulierungsventils mit variablem Durchsatz reguliert wird, das in der Leitung, die den Durchgang von Gas ermöglicht, angeordnet ist.

6. Befüllungsverfahren nach Anspruch 5, **dadurch gekennzeichnet, dass** das Regulierungsventil mit variablem Durchsatz mit Hilfe eines Regulierers mit proportionaler, integraler und differentieller, konstanter oder variabler Wirkung gesteuert wird.

7. Befüllungsverfahren nach Anspruch 5, **dadurch gekennzeichnet, dass** das Ventil mit variabler Durchsatzregulierung mit Hilfe eines Regulierers mit prädiktiver Wirkung gesteuert wird.

8. Befüllungsverfahren nach einem der Ansprüche 1 bis 3, **dadurch gekennzeichnet, dass** der Befüllungsdurchsatz des Behälters mit Hilfe einer Gesamtheit von Ein/Aus-Ventilen mit unterschiedlichen Öffnungsquerschnitten reguliert wird, die in der Leitung, die den Durchlass von Gas ermöglicht, parallel angeordnet sind.

9. Befüllungsverfahren nach einem der Ansprüche 1 bis 3, **dadurch gekennzeichnet, dass** der Befüllungsdurchsatz des Behälters mit Hilfe der Veränderung der Frequenz der elektrischen Versorgung eines Kompressors oder mit Hilfe der Veränderung der Frequenz der Druckluftversorgung eines Kompressors reguliert wird.

10. Verfahren nach einem der Ansprüche 1 bis 9, **dadurch gekennzeichnet, dass** der Erste der aufeinanderfolgenden Befüllungsschritte so beschaffen ist, dass eine Gastemperatur innerhalb des Behälters erreicht wird, ohne sie zu überschreiten, die gleich dem tolerierten Maximalwert für den Behälter ist.

11. Verfahren nach Anspruch 10, **dadurch gekennzeichnet, dass** die folgenden Befüllungsschritte (nach dem ersten Schritt) so beschaffen sind, dass die Temperatur des Gases in dem Behälter auf dem tolerierten Maximalwert für den Behälter gehalten wird.

12. Verfahren nach einem der Ansprüche 1 bis 11, **dadurch gekennzeichnet, dass** es einen Schritt zum Berechnen einer optimalen Kurve für die Befüllungsdurchsätze als Funktion der Zeit umfasst, wobei die optimale Kurve im Voraus berechnet wird, um eine minimale Gesamtbefüllungszeit zu erhalten, die abhängt von: den Eigenschaften des Vorratsbehälters (Geometrie und/oder Wärmewiderstand), den Umgebungsbedingungen (insbesondere der Umgebungstemperatur), den Bedingungen der Gasquelle (insbesondere Druck und Temperatur des Befüllungsgases) und von eventuellen Beschränkungen (insbesondere zulässige maximale Temperatur der Wand des Vorratsbehälters, maximal möglicher Befüllungsdurchsatz).

13. Befüllungsverfahren nach einem der Ansprüche 1 bis 12, **dadurch gekennzeichnet, dass** es einen Schritt des Berechnens einer optimalen Kurve von Befüllungsdurchsätzen als Funktion der Zeit umfasst, wobei die optimale Kurve im Voraus berechnet wird, um eine minimale Gesamtbefüllungszeit zu erhalten, wobei die Befüllungskurve zwischen zwei Grenzkurven, nämlich einer "unteren Grenze" und einer "oberen Grenze", liegt, die berechnet werden und den Gasmassen entsprechen, die in Übereinstimmung mit den folgenden Werten in Bezug auf eine Befüllungszeit übertragen werden:
| Befüllungszeit als Prozentsatz der Gesamtzeit: | untere Grenze als Prozentsatz der übertragenen Gesamtmasse: | obere Grenze als Prozentsatz der übertragenen Gesamtmasse: |
|---|---|---|
| 0 | 0 | 0 |
| 10 | 12 | 35 |
| 20 | 25 | 48 |
| 30 | 37,5 | 58 |
| 40 | 48 | 67 |
| 50 | 58 | 75 |
| 60 | 68 | 83 |
| 70 | 75 | 88 |
| 80 | 82,5 | 92 |
| 90 | 91 | 96 |
| 100 | 100 | 100 |
